# EUROPEAN PATENT APPLICATION

(11) **EP 4 300 133 A1**
(43) Date of publication of application: **03.01.2024**
(21) Application number: 22181377.7
(22) Date of filing: 27.06.2022
(51) Int. Cl.: G01S 7/481, G01S 17/48, G01S 17/89, G01S 17/931

(54) **OPTICAL SENSING SYSTEM**

(71) Applicant: VoxelSensors SRL, 1190 Brussels (BE)
(72) Inventor: Van Der Tempel, Ward, Keerbergen (BE); Mourad, Christian, Genval (BE)

(57) **Abstract**

The present invention relates to an optical sensing system (1) for efficient optical sensing. The system (1) comprises at least one optical sensor (2), and optics (3) able to produce an image of a scene (4) on said optical sensor (2). The system (2) further comprises at least one light source (5), and scanning means (9) adapted to scan a light beam (33) of said light source (5) on said scene (4) along a trajectory (8). The system (1) further comprises a controller (12), wherein said controller (12) is adapted to vary the output optical power of said light source (5) between at least a first predetermined value (11) and a second predetermined value (10) higher than said first predetermined value.

## Description

### TECHNICAL FIELD

The present invention relates to an optical sensing system. In particular, the present invention relates to an optical sensing system for efficient optical sensing.

### BACKGROUND

Optical scanning sensing systems are used for a variety of applications. These systems rely on scanning structures or lines on a scene, and detecting based thereon the depth of objects in the scene. An important parameter of any such system is the distance range in which such a system operates. It is desired that such an optical sensing system is able to obtain information about both objects closer and further from said sensor at the same time. While maximizing said distance range, the power consumption of the system must be kept optimized. For example, maximizing said distance range should not lead to an increase in the power consumption.

Another requirement for such a system is to work in different environments with different light intensity, for example in case the system operates in a dark room or in daylight.

There is need therefore for optical scanning systems that can adjust according to the distance of objects in the scene and/or to the intensity of light at said system, while at the same time having an optimized power consumption. The present invention aims to resolve in part the problems mentioned above.

### SUMMARY OF THE INVENTION

It is an object of embodiments of the present invention to provide an efficient optical sensing system. The above objective is accomplished by a system and method according to the present invention.

In a first aspect, the present invention relates to an optical sensing system for efficient optical sensing, comprising:
- at least one optical sensor,
- optics able to produce an image of a scene on said optical sensor,
- at least one light source,
- scanning means adapted to scan a light beam from said light source on said scene along a trajectory, and
- a controller,
characterized in that said controller is adapted to vary the output optical power of said light source between at least a first predetermined value and a second predetermined value higher than said first predetermined value.

It is an advantage of embodiments of the present invention that a power efficient optical sensing system is obtained.

It is an advantage of embodiments of the present invention that points defining objects far from said optical sensor, as well as nearby to said optical sensor, can be identified.

It is an advantage of embodiments of the present invention that a fast sensing system is obtained, due to obtaining information about both objects far from said optical sensor as well as nearby to said optical sensor.

It is an advantage of embodiments of the present invention that said second predetermined value corresponds to objects further from said sensor, and said first predetermined value corresponds to objects close to said sensor.

It is an advantage of embodiments of the present invention that it is possible to obtain information about objects in said scene only from a partial scan of a beam from said light source on said scene.

It is an advantage of embodiments of the present invention that a high dynamic range is obtained.

It is an advantage that the spatial integrity of the projected structure is maintained over a wider range of distances and albedo's of objects. In an optical system imaging an optical structure such as a spot, the secondary signals, optical artefacts, etc., such as unwanted signal due to scattering in the optical path, glare, flare, crosstalk ... etc, typically scale linearly with the wanted signal. It is desirable to keep these secondary signals and/or artefacts below a certain detection threshold.

It is an advantage of embodiments of the present invention to maximize the amount of samples or times the signal is in the desired range with the secondary signals and/or artefacts below a certain detection threshold.

Preferred embodiments of the first aspect of the invention comprises one or a suitable combination of more than one of the following features.

Said optical sensor has a sampling frequency, wherein said output optical power of said light source is preferably varied or modulated between said first and second predetermined values with a rate of at most said sampling frequency.

It is an advantage of embodiments of the present invention that the power needed for scanning said scene is reduced. It is an advantage of embodiments of the present invention that a fast sensing system is obtained due to obtaining information about both objects far from said optical sensor as well as nearby to said optical sensor, while still maintaining a good resolution.

The optical sensing system preferably comprises a processing unit, wherein said unit is capable of estimating a power level of the reflected signal by at least one object in said scene and received by said optical sensor, wherein said unit is capable of tuning said controller to vary the output optical power of said light source (e.g. between said first and second predetermined values) based on said power level of the reflected signal.

Said unit is preferably capable of estimating a distance between said optical sensor and points of said at least one object in said scene along said trajectory, wherein said unit is capable of tuning said controller to vary the output optical power of said light source based on said distance.

Said unit preferably capable of estimating a spot size of the reflected signal, wherein said unit is capable of tuning said controller to vary the output optical power of said light source based on said spot size.

It is an advantage of embodiments of the present invention that a power efficient system is obtained, due to optimizing the output optical power levels depending on the power level of said reflected signal and/or depending on the distance of objects from said optical sensor and/or depending on the spot size. It is an advantage of embodiments of the present invention that it is simple to tune said output optical power of said light source based on said power level of the reflected signal and/or said distance and/or said spot size. It is an advantage of embodiments of the present invention that said distance can be estimated by triangulating points of said at least one object in said scene detected by said optical sensor with data of emitted light of said at least one light source.

The output optical power is preferably varied from said second predetermined value to said first predetermined value.

It is an advantage of embodiments of the present invention that the output optical power is reduced from said second predetermined value to said first predetermined value until it reaches the suitable level that corresponds with the acceptable power level of the reflected signal and/or the distance and/or spot size. It is an advantage of embodiments of the present invention that the power consumption is optimized.

Said system preferably comprises at least two light sources, wherein the output optical power of the first light source is said first predetermined value, and the output optical power of the second light source is said second predetermined value, wherein the at least two light sources operate at different times.

It is an advantage of embodiments of the present invention that one light source is adapted to illuminate a light beam at closer objects to said sensor, while the other light source is adapted to illuminate a light beam at further objects from said sensor. It is an advantage of embodiments of the present invention that different light sources are adapted to illuminate light beams on objects at different distance ranges from said optical sensors, or objects having different reflectivity.

The optical sensor preferably comprises a plurality of pixel sensors, each pixel sensor comprising a photo detector. Said photo detector is preferably a single photon detector, preferably a single photon avalanche detector. Said controller is preferably adapted to vary a bias of each of said photo detectors

It is an advantage of embodiments of the present invention that the sensitivity to active light and noise of each photo detector can be adjusted, wherein a balance between the two can be obtained.

The scanning means preferably scan a light beam from said light source on said scene based on a beam steering function having a beam angular velocity, wherein the output optical power of said light source is varied based on said angular velocity. Said output optical power is preferably equal to at most said first predetermined value when said angular velocity is less than a threshold angular velocity.

It is an advantage of embodiments of the present invention that a significant power reduction is obtained for a minimal reduction in the field of illumination.

The duty cycle of said light source is at most 80%, preferably at most 60%, more preferably at most 40%, most preferably at most 20%. It is an advantage of embodiments of the present invention that the power consumption is reduced.

In a second aspect, the present invention relates to a method for optical sensing, comprising the steps of:
- illuminating a scene by means of a light beam from a light source,
- scanning said light beam on said scene along a trajectory,
- receiving a reflected light signal from said scene by means of a receiver,
- sampling said reflected light signal,
characterized in that the method further comprises the step of:
- varying the output optical power of said light source between at least a first predetermined value and a second predetermined value higher than said first predetermined value.

Preferred embodiments of the second aspect of the present invention comprises one or a suitable combination of more than one of the following features:
- said reflected signal is sampled with a predetermined sampling frequency, wherein the step of varying the output optical power between said first and second predetermined values is done with a rate of at most said sampling frequency,
- the method comprises the steps of estimating a power level of the reflected signal and tuning based thereon the output optical power of said light source and/or estimating a distance between the receiver and said scene and tuning based thereon the output optical power of said light source and/or a estimating a spot size of said reflected signal and tuning based thereon the output optical power of said light source.
- the method comprises the step of scanning said light beam on said scene based on a beam steering function having an angular velocity, wherein the output optical power of said light source is varied based on said angular velocity, and
- said output optical power is adapted to be equal to at most said first predetermined value when said angular velocity is less than a threshold angular velocity.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The disclosure will be further illustrated by means of the following description and the appended figures.
Figure 1 and 2 show an optical sensing system (1) comprising an optical sensor (2), wherein the output optical power of a light source (5) is varied between a first predetermined value (11) and a second predetermined value (10), in two different variation rates, according to embodiments of the present invention.
Figure 3 shows the optical sensing system (1), wherein the output optical power of said light source (5) is varied between said first predetermined value (11) and said second predetermined values (10) based on the received signal by said optical sensor (2), according to embodiments of the present invention.
Figure 4 shows a simplified field of view of an optical sensor (2) for a close object (a, c) and a far object (b, d) to and from said optical sensor (2), wherein said light source (5) has a higher output optical power in (a, b) and a lower output optical power in (c, d), according to embodiments of the present invention.
Figure 5 shows an example of the expected average photon counts received by a pixel sensor per sample period of said pixel sensor as a function of the distance from said pixel sensor, wherein the output optical power of said light source (5) is 0.2 W, 1 W, 0.01 W, and 0.05 W, for (a, b, c, d), respectively, according to embodiments of the present invention.
Figure 6 shows the field of view of said optical sensor (2), wherein the field of view is reduced by 10%, according to embodiments of the present invention.
Figure 7 shows in a sinusoidal function (25) modulating the deflection angle of scanning means (9) scanning said light source (5), wherein said output optical power is varied based on the angular velocity of said function (25), according to embodiments of the present invention.
Figure 8 shows the field of view of a plurality of pixel sensors, wherein detections having different spot sizes are shown, according to embodiments of the present invention.
Figure 9 shows an implementation of the optical sensing system (1), wherein the output optical power of said light source (5) is varied in a staircase fashion while the light beam being scanned in the scene (4), according to embodiments of the present invention.
Figure 10 shows a light beam (7) scanned on a scene (4) in a staircase fashion, according to embodiments of the present invention.

Any reference signs in the claims shall not be construed as limiting the scope. In the different drawings, the same reference signs refer to the same or analogous elements.

### DETAILED DESCRIPTION

The present invention relates to an optical sensing system for efficient optical sensing.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the description provided herein, numerous specific details are set forth. However, it is understood that embodiments of the invention may be practiced without these specific details. In other instances, well-known methods, structures and techniques have not been shown in detail in order not to obscure an understanding of this description.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a contaminant" refers to one or more than one contaminant.

The recitation of numerical ranges by endpoints includes all numbers and fractions subsumed within that range, as well as the recited endpoints.

In a first aspect, the present invention relates to an optical sensing system for optical sensing, preferably for efficient optical sensing. The system comprises at least one optical sensor. The system further comprises optics able to produce an image of a scene on said optical sensor. Said optics may for example comprise a simple pin-hole.

The system further comprises at least one light source. For example, the light source is adapted to be in a wavelength detectable by the optical sensor. For example, between 100 nanometer and 10 micrometer, preferably between 100 nanometer and 1 micrometer. For example, the optical sensor is a photo detector or a matrix of photo detectors that is able to detect photons impinging on each detector within a wavelength detection window falling within the range of 100 nanometer and 10 micrometer, preferably between 100 nanometer and 1 micrometer.

The system further comprises scanning means adapted to scan, preferably at least partially, a light beam from said light source on said scene along a trajectory. Said scanning is preferably continuous, such that objects in the scene are continuously scanned and identified. For example, the light source generates a light beam, which produce a light spot on an object, wherein said beam is continuously scanned on said scene along said trajectory, wherein for example after every some time, the beam would have scanned all or almost all of the scene. Scanning may be for example in a Lissajous pattern or a raster scan, or the like. The scanning means may for example be a MEMS scanner.

The system further comprises a controller. For example, the controller is connected to said light source, and preferably also connected to said scanner. The system is characterized in that said controller is adapted to vary the output optical power of said light source between at least a first predetermined value and a second predetermined value higher than said first predetermined value. For example, varying said output optical power continuously. For example, the output optical power is said first predetermined value for a predetermined period of time, after which said output optical power is said second predetermined value for a predetermined period of time. Said first predetermined value may for example correspond to objects closer to said sensor, and said second predetermined value corresponds to objects further from said sensor. Said output optical power may also be varied between more than two predetermined values, for example depending on the scene and objects in the scene and their proximity to said system.

Since objects having different proximities from said system reflect light differently e.g. due to their distance from said system, or e.g. due to a different reflectivity of each object, it is necessary to tune the output optical power of said light source such that the reflected signal detected by the optical sensor is within the limit adapted therefor, for example within the power limits for which said optical sensor is adapted. For example, such that the optical sensor does not get over stimulated, or under stimulated. This is advantageous in obtaining a power efficient system, since the output optical power is tuned based for example on the proximity and/or reflectivity of objects. This is also advantageous since objects at different proximities and reflectivities can be identified using as few as one light source, for example by having the light source tuned to different output optical power levels depending thereon. This also allows fast sensing, since a single, quick and partial scan would produce information about different objects. This also allows a high dynamic range since objects at different proximities can be identified in one scan, at almost the same time.

The output optical power may also be tuned based on other factors than said proximity and/or reflectivity, as described below. This also allows to have a good spatial integrity of the detected optical signal.

Artefacts in optical and/or imaging systems, such as scattering, glare, flare, ghosting, speckle ... etc., cause secondary (tertiary, etc.) signals which are typically unwanted. The stronger the reflection optical signal from the scene is, the stronger also the unwanted secondary signals. The reflected signal may become too high such that secondary unwanted signals jeopardize adequate imaging of the wanted optical signal, meaning the spatial integrity of the optical signal is reduced. By providing measurement scenario with lower, different, or adapted optical power, we can guarantee a good spatial integrity in at least one of the scenarios.

Preferably, said optical sensor has a sampling frequency, wherein said output optical power of said light source is varied or modulated between said first and second predetermined values with a rate of at most said sampling frequency. Preferably, the variation or modulation rate is such that different parts of the scene are scanned by said light beam from said light source having an output optical power of either of said first or said second predetermined value. For example, some parts of the scene are scanned by said light beam from said light source having an output optical power of said first predetermined value, and other parts of the scene are scanned by said light beam from said light source having an output optical power of said second predetermined value. For example, the modulation rate may be at most 2 times less than the sampling rate, preferably at most 5 times, preferably at most 10 times. Alternatively, the modulation rate may be such that the output optical power of said light source is varied between said first and second predetermined values each time said scanning means scan at least 1% of said scene, or for example at least 5% of said scene.

Said variation or modulation is advantageous since it is possible to obtain information about different objects in the scene, while still maintaining a good resolution. For example, the modulation is fast enough to keep a good resolution of the objects in the scene, while at the same time identify proximity and/or reflectivity of objects in the scene, for example based on the reflected signal detected by said sensor.

Said output optical power may be depending on the proximity and/or reflectivity of said objects. However, it may also start by a scan of said light beam while said light source is being modulated between said first and second predetermined values in a random fashion, based on which it is determined afterwards whether certain regions in the scene need to be scanned by said light beam from said light source with the output optical power being the first predetermined value or the second predetermined value. For example, based on the reflected signal detected by said sensor (e.g. the power of said reflected signal). This is advantageous in reducing the power needed for scanning said scene.

Preferably, the sampling rate of said optical sensor is at least 1 MHz, preferably at least 10 MHz, more preferably at least 100 MHz. This is suitable since in real life, objects do not move very fast in comparison to such a sampling rate of the detector. For example, the optical sensor have a time resolution of at least 1 microsecond, preferably at least 100 nanoseconds, more preferably at least 40 nanoseconds. This is advantageous in scanning said scene prior to knowing for example which parts of said scene comprises which objects, having which reflectivity and/or being at which proximity from said optical sensor.

Preferably, said system comprises a processing unit. For example, said processing unit is connected to said optical sensor.

Said unit is preferably capable of estimating a power level of the reflected signal by at least one object in said scene and received by said optical sensor. Said unit is then capable of tuning said controller to vary the output optical power of said light source based on said power level of the reflected signal.

Said unit is preferably capable of estimating a distance between said optical sensor and points of said at least one object in said scene along said trajectory. Said unit is then capable of tuning said controller to vary the output optical power of said light source based on said distance.

Said unit is preferably capable of estimating a spot size of the reflected signal. Said unit is then capable of tuning said controller to vary the output optical power of said light source based on said spot size.

The processing unit is advantageous in optimizing the power consumption of the system in a simple way, since the light source emits light in the needed amount of output optical power.

Preferably, said distance can be estimated by triangulating points of said at least one object in said scene detected by said optical sensor, with data of emitted light of said at least one light source. This is similar to triangulating output of two optical sensors, since the data of the emitted light of said light source is known i.e. it is known at which part of the scene the light would be illuminated at a certain time.

Preferably, said unit is capable of estimating the ratio between the output optical power emitted by said light source and the optical power received by said sensor, for example in order to estimate said distance and/or the reflectivity of an object. For example, if the ratio is too high, this means the object is either too close and/or too reflective. Alternatively, if the ratio is too low, this means the object is either too far or non-reflective. Preferably, the ratio is kept between a lower and an upper end values. For example, in case the ratio is too high, the output optical power of said light source is reduced, such that the ratio remains between said lower and upper end values.

Preferably, said unit is capable of classifying regions in said scene to at least two regions. For example, a first region comprising objects further away from said optical sensor and/or having low reflectivity, and a second region comprising objects closer to said optical sensor and/or having high reflectivity, for example such that the reflected signal is suitable to be received by said optical sensor, for example to avoid the reflected signal from being too strong and therefore producing artefacts such as glare, lens flare, scattering, etc, or from being too weak and therefore not being detected. Furthermore, the system may be capable of tracking movement (e.g. within the same distance range) of objects in any of the regions, for example so as to adapt said light source to illuminate light with an output optical power suitable for said objects during their movement and afterwards. The system is also capable of tracking movement of objects closer to or away from said optical sensor, and adapting the output optical power of said light source accordingly. For example, if an object close to said sensor moves away from said sensor, for example more than a threshold distance from said sensor, or for example moves in such a way that the reflected signal is lower than what the sensor is adapted to receive, then the output optical power of said light source is increased, for example increased from said first predetermined value to said second predetermined value.

Preferably, said system further comprises at least one memory element, wherein said element is capable of storing locations of objects in a scene at different times. For example, such that said light beam is illuminated with the appropriate output optical power on objects in the scene, for example based on the previous scanning cycle. This is also useful in allowing the system to memorize the locations of objects in the scene and illuminate them accordingly with the light beam having the appropriate output optical power.

Preferably, the output optical power is defined such that it is proportional to the square of the distance of the object from the sensor. Therefore, the further the object from said sensor, the more the output optical power of said light source should be, so as to keep the power levels of said reflected signal received by said sensor within the range for which the sensor is adapted to receive. Vice-versa, the closer the object to said sensor and/or light source, the lower the output optical power of said light source should be so as to keep the optical signal intensity as perceived or measured by said image sensor within the preferred range.

Preferably, the spot size is below a threshold spot size. The spot size may either refer to the size of the light spot created by the illuminating light beam on an object in the scene, and/or the size of the light spot created by the reflected light of said object and as detected by said optical sensor. For high intensity signals, the measured spot size may become larger due to effects such as glare, optical scattering, blooming in the sensor pixel array, optical and/or electrical crosstalk in the sensor pixel array. As such, the measurement of the spot size may be used to quantify the spatial integrity and to judge if a change in the output optical power for this spot location is desirable. The threshold spot size may refer to the maximum allowed spot size, for example a spot size at which the sensor is adapted to work. For example, in case the optical sensor comprises a plurality of pixel sensors (e.g. wherein each pixel sensor comprises a photo detectors), the spot size is preferably less than 3 pixel sensors, more preferably less than 4 pixel sensors, even more preferably less than 5 pixel sensors. For example, the spot size may provide an indication of the distance of the object from said optical sensor, as for some illumination types such as collimated beams with an optical aperture, a large spot size means that the object is closer to said sensor, and a small spot size means that the object is further from said sensor. Alternatively, the spot size may refer to the spot size resulting from illumination of light on an object. For example, if an object is not smooth or flat, the light illumination on said object may cause light to be reflected on the object multiple times before finally reaching the optical sensor. This may increase the spot size on the object. Another example is if the light is absorbed by said object, in which the spot size may be different than anticipated. A threshold spot size determines whether the output optical power should be increased or decreased. For example, if the spot is larger than the threshold spot size, then the output optical power is decreased.

Preferably, the power levels received by the optical sensor are within a window, in which the sensor is adapted to work. For example, between an upper power value and a lower power value, or for example corresponding to a predetermined upper photon count and lower photon count per sample period. For example, between 5 and 500 expected photons impinging per sample period per pixel area.

Preferably, the invention is carried out based on estimating at least one of the elements described above i.e. the distance (e.g. obtained using triangulation), the power levels of the reflected signal, and the spot size, and the reflectivity. Therefore, one or more of these elements can be estimated, as long as the main goal is achieved: estimating the appropriate output optical power of said light source to achieve the appropriate power levels of the reflected signal in which the sensor is adapted to work.

Preferably, the output optical power is varied from said second predetermined value to said first predetermined value. For example, based on said power level of the reflected signal and/or said distance and/or said spot size. For example, the initial output optical power of said light source is said second predetermined value. However, after obtaining information about the power level of the reflected signal and/or said distance and/or said spot size, the output optical power either remains equal to said second predetermined value e.g. in regions of the scene in which the objects are further away from said optical sensor, or is reduced down to said first predetermined value e.g. in regions of the scene in which the objects are closer to said optical sensor, so as to always maintain the power level of the reflected signal within the range at which the sensor is adapted to operate. This is done continuously such that, for example, in case the object which initially receives light in said first predetermined value moves away from said sensor, then the output optical power is re-adjusted to the second predetermined value. This is advantageous in optimizing the power consumption.

The system preferably comprises at least one optical sensor, wherein the distance is estimated by displacement on the sensor of optical signals corresponding to points of said at least one object in said scene detected by said optical sensor, the displacement being referred to the expected position based on prior knowledge on the light source, and/or the displacement being referred to the displacement of optical signal corresponding to points of said at least one object in said scene detected by at least one other optical sensor. This is advantageous in that it is simple to obtain a distance between each object and said sensors, and thereafter to tune said output optical power of said light source based on said distance.

Scanning a light beam from said light source is advantageous in allowing triangulation. For example, using a system comprising a light source illuminating a light beam on a scene (e.g. an environment) and two of said optical sensors e.g. oriented differently than each other, wherein said two sensors have a shared field of view of the scene, it is possible to convert x-y-time data of the two sensors to x-y-z-time data by triangulation. For example, by adapting said light source to illuminate a light beam on said scene in an illumination trace, wherein said light source comprises means adapted to scan said light beam on said scene (preferably continuously), wherein said optical sensors monitor the light spot produced by said light beam and output locations of points of at least one object (e.g. points of surfaces of said object) in said scene along said trace at a plurality of instances, wherein the x-y-time data of the two optical sensors can be converted to x-y-z-time data using triangulation. The light source may act for example as a reference point, such that said locations of said points of said object of the first optical sensor can be synchronized with those of the second optical sensor, to create the depth or z-dimension. The light source may be illuminating and scanning said light beam on a scene to be imaged in a Lissajous fashion or pattern, or raster scan, or the like. This illumination trajectory is advantageous in allowing efficient and fast image detection, since after several illumination cycles, a significant part of the image is already illuminated. Other illumination patterns may be envisaged.

Preferably, said system comprises two light sources. For example, wherein the output optical power of the first light source is said first predetermined value, and the output optical power of the second light source is said second predetermined value, wherein said first and second light sources are operating at different times i.e. they do not operate at the same time. For example, the first light source operates at T = 10-20 nanoseconds, 30-40 nanoseconds, 50-60 nanoseconds, while the second light sources operates at T = 20-30 nanoseconds, 40-50 nanoseconds, 60-70nanoseconds...etc. For example, wherein one light source is adapted to illuminate light beams on objects that are further away from said sensor e.g. the light source having an output optical power equal to the second predetermined value, while the other light source is adapted to illuminate light beams on objects that are closer to said sensor e.g. the light source having an output optical power equal to the first predetermined value. Distance is not the only criteria, also reflectivity of objects determines whether an object is illuminated by a light having an output optical power of the first or the second predetermined value. For example, an object reflecting too much light such that the reflected signal received by the optical sensor is too strong, is illuminated by a light beam of a light source having an output optical power of said first predetermined value.

Preferably, said optical sensor comprises a plurality of pixel sensors, each pixel sensor comprising a photo detector. Preferably, said photo detector is a single photon detector, preferably a single photon avalanche detector. Alternatively, said photo detector is an avalanche photo detector.

Preferably, each photo detector is adapted to produce a stream of pulses, for example whereby each pulse is the result of the detection of an impinging photon. On average, the time interval between pulses is related to the intensity of the optical signal being detected. The higher the intensity for a given time window, the shorter the average time in between pulses. Of course, as is known by a person skilled in the art, the actual time between pulses follows a Poisson distribution.

Preferably, each detector may be arranged in a reverse biased configuration. The detector is capable of detecting single photons impinging thereon. The detector may be adapted to output a logic signal e.g. an electrical detection signal upon detection of a photon. For example, a detection signal may be represented by a signal comprising logic '1' e.g. a detection, while no detection signal may be represented by a signal comprising logic '0' e.g. no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal.

Preferably, the optical sensor comprises more than 100 pixel sensors, preferably more than 1,000 pixel sensors, more preferably more than 10,000 pixel sensors, even more preferably more than 100,000 pixel sensors, most preferably more than 1,000,000 pixel sensors. For example, the optical sensor may be arranged in a matrix fashion, wherein said optical sensor comprises 1,000 pixel sensor rows and 1,000 pixel sensor columns.

Preferably, said controller is adapted to vary a bias of each of said photo detectors, either all together, in groups or individually. For example, the bias voltage of said photo detectors can change the sensitivity of said photodetectors. Varying said bias allows to control the sensitivity and the noise of the detector, by switching said detector from a regime in which it has a high quantum efficiency to a regime in which it has a low quantum efficiency. For example, by operating at the regime having a low quantum efficiency, the noise can be reduced, but at the same time the sensitivity to active light is reduced. On the other hand, by operating at the regime having a high quantum efficiency, the sensitivity to active light is improved, but the noise is also increased. Therefore, a balance is desired between the two (i.e. the sensitivity and the noise).

Preferably, the scanning means scan said light beam from said light source on said scene based on a beam steering function having a beam angular velocity. Said function is preferably sinusoidal. For example, the deflection angle of said light beam is modulated based on said beam steering function. The output optical power of said light source is varied based on said beam angular velocity. For example, said beam angular velocity has a maximum value, wherein the light source illuminates said light beam on said scene for angular velocities above 1% of said maximum value, preferably above 2%, more preferably above 5%, even more preferably above 10%, most preferably above 20%. In other words, the light source is off or illuminates said scene with minimal output optical power for low angular velocities e.g. less than a threshold angular velocity. In other words, this means that the extremities of the scene e.g. corresponding to the highest deflection angle of the beam steering function or e.g. areas at the very edges of said scene, are either not illuminated or illuminated minimally by said light beam. Preferably, said output optical power is equal to at most said first predetermined value when said angular velocity is less than a threshold angular velocity, more preferably said output optical power is equal to at most a minimal value or to zero when said angular velocity is less than a threshold angular velocity

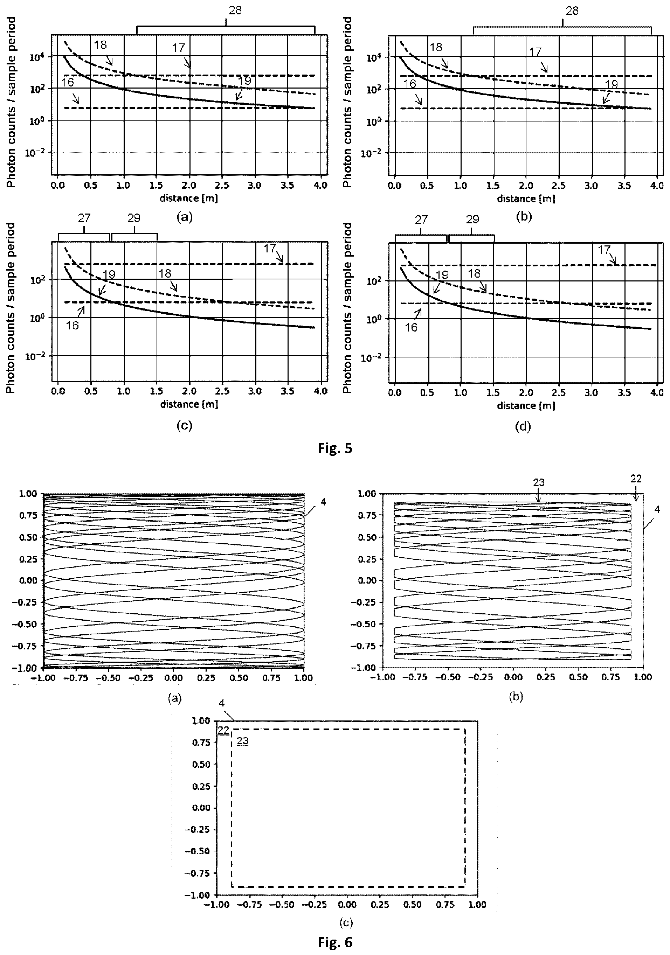

It is noteworthy that the scanner still moves in the same trajectory, even at regions at which said scene is illuminated with minimal or zero output optical power. Although the field of illumination (i.e. the regions at which the scene is illuminated) is reduced slightly, the power reduction is significant in case of a non-uniform angular velocity of the beam steering. For example, in case of a sinusoidal beam steering, a 10% reduction in the field of illumination results in a power reduction of 50%. As shown in Fig. 6 below, a 10% reduction in the field of illumination is very much tolerable.

Preferably, the system comprises image representation means, for example a screen-like or other image representation devices, so as to reproduce locations of points of said objects in said scene.

Preferably, the optical system is used for 3D vision applications. For example, the system may be used to visualize objects in a three dimensions. Alternatively, said sensor may allow analyzing the scene, for example by extracting features of objects in the scene, without necessarily producing an image of said scene.

Preferably, the system further comprises a plurality of optical sensors and/or a plurality of light sources. This is advantageous in creating 3D vision. For example, each optical sensor may be oriented differently, such that a 3D perception of the scene to be imaged is captured, for example by triangulating the output of two such optical sensors.

Preferably, the duty cycle of said light source is at most 80%, preferably at most 60%, more preferably at most 40%, most preferably at most 20%. For example, the controller controls the duty cycle of said light source. This reduces the power consumption of the system. The duty cycle may be dynamically changed, for example being 100% at a certain point in time, and 40% at another point in time. This may be based for example on whether the scene being viewed by a user is changing, and how fast said change is. For example, in case the user views the same scene e.g. without changing their head pose, then the duty cycle is reduced.

In a second aspect, the present invention relates to a method for optical sensing. The method comprises the step of illuminating a scene by means of a light beam of a light source. The method further comprises the step of scanning said light beam on said scene along a trajectory, for example using a scanner, for example a MEMS scanner. The method further comprises the step of receiving a reflected light signal from said scene by means of a receiver, for example receiving a reflected light signal from an object in said scene. For example, the receiver is an optical sensor, for example comprising a plurality of pixel sensors, each pixel sensor comprising a photo detector, preferably a single photon detector. For example, illuminating a light beam in a wavelength detectable by said detectors of said optical sensor.

The method further comprises the step of sampling said reflected signal. For example, sampling with a predetermined sampling frequency. The method is characterized in that the method further comprises the step of varying the output optical power of said light source between at least a first predetermined value and a second predetermined value higher than said first predetermined value. For example, by means of a controller which controls an output optical power of said light source.

Preferably, said reflected signal is sampled with a predetermined sampling frequency, wherein the step of varying said output optical power between said first and second predetermined values is done with a rate of at most said sampling frequency. For example, the varying or modulating rate of said output optical power may be at most 2 times less than the sampling rate, preferably at most 5 times, preferably at most 10 or 20 times. The step of varying may also be done each time said scanning means scan at least 1% of said scene, or for example at least 5% of said scene.

Preferably, the method comprises the step of estimating a power level of the reflected light signal, and tuning based thereon the output optical power of said light source.

Preferably, the method comprises the step of estimating a distance between the receiver and said scene, and tuning based thereon the output optical power of said light source.

Preferably, the method comprises the step of estimating a spot size of said reflected light signal, and tuning based thereon the output optical power of said light source.

Preferably, the method comprises the step of triangulating points of said object in said scene detected by said receiver, with points of said object in said scene detected by a second receiver. Alternatively, the method comprises the step of triangulating points of said object in said scene detected by said receiver, with data of the light beam emitted by said light source.

Preferably, the method comprises the step of classifying regions in said scene to at least two regions, preferably at least three regions. For example, based on the proximity of objects in the scene to said receiver and/or reflectivity. For example, regions to be illuminated with said light beam from said light source having an output optical power of said first predetermined value, and regions to be illuminated with said light beam from said light source having an output optical power of said second predetermined value.

Preferably, the method comprises the step of scanning said light beam on said scene based on a beam steering function having a beam angular velocity, wherein the output optical power of said light source is varied based on said angular velocity. For example, the method may comprise the step of illuminating the light beam from said light source on said scene for angular velocities above 1% of a maximum value, preferably above 2%, more preferably above 5%, even more preferably above 10%, most preferably above 20%. For example, the method may comprise the step of illuminating the beam of the light source on said scene for angular velocities above a threshold angular velocity with said light source having an output optical power of said second predetermined value, and illuminating the light beam of the source on said scene for angular velocities lower than a threshold angular velocity with said light source having an output optical power of said first predetermined value or zero. Preferably, said output optical power is adapted to be equal to at most said first predetermined value when said angular velocity is less than a threshold angular velocity.

Any feature of the second aspect (method) may be as correspondingly described in the first aspect (system).

In a third aspect, the present invention relates to use of a system according to the first aspect and/or a method according to the second aspect, for optical sensing, preferably for efficient optical sensing.

Further characteristics and advantages of embodiments of the present invention will be described with reference to the figures. It should be noted that the invention is not restricted to the specific embodiments shown in these figures or described in the examples, but is only limited by the claims.

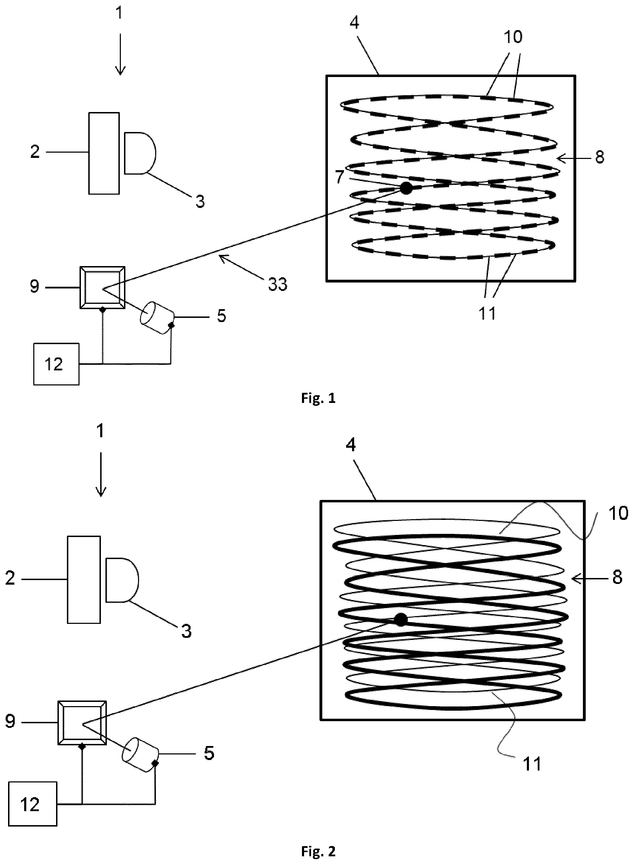

Fig. 1 shows an optical sensing system (1) comprising an optical sensor (2) and optics (3) able to produce an image of a scene (4) on said optical sensor (2). The system (1) further comprises a light source (5), which illuminates a light beam (33) that produces a light spot (7) on a scene (4). However, the invention is not limited to producing a light spot (7) in the shape of a dot, but can be any other suitable illumination pattern. The system (1) further comprises scanning means (9), adapted to scan said light beam (33) on said scene (4). For example, the scanning means (9) may be a reflector or a MEMS mirror or the like, which is able to scan the light beam (33) on the scene (4), for example on different parts of the scene (4). The light beam (33) is scanned along an illumination trajectory (8), for example in a Lissajous fashion.

The system (1) further comprises a controller (12) connected to said light source (5) and said scanning means (9). The controller (12) is adapted to continuously vary the output optical power of said light source (5). For example, by varying the input to said light source (5). For example, varying the output optical power of said light source (5) between a first predetermined value (11), for example a lower output optical power level represented by a thinner line, and a second predetermined value (10), for example a higher output optical power level represented by a thicker line, this happening repeatedly. For example, the output optical power is varied with a rate of at most the sampling rate of said optical sensor (2), for example 100 MHz. The high rate of modulation, in combination with the Lissajous scanning, is particularly advantageous in scanning different objects in the scene (4), in both cases where said objects are far or close to said optical sensor (2), for example at almost the same time. However a varying or modulation rate of for example 10 or 20 times less than said sampling rate would still work. This entails that the sensor is able to sample for at least one sampling period the returning optical signal associated with the first predetermined value (11) of the light source (5), alternated with at least 1 sample associated with the second predetermined value (10).

Fig. 2 shows the system (1) similarly to Fig. 1, however the output optical power of said light source (5) is varied with a slower rate than in Fig. 1. For example, 10 or 100 times slower. Alternatively, for example, the output optical power of said light source (5) is varied each time said scanning means (9) scan a predetermined portion of said scene (4), for example at least 1%, or 2%, or 5% of said scene (4). For example, said controller (12) varies the output optical power between a first predetermined value (11) for a predetermined portion or part of said scene (4), and a second predetermined value (10) for a predetermined portion or part of said scene (4), repeatedly. This is more time consuming than the implementation shown in Fig. 1, however it allows to obtain a better resolution for the objects in the scene (4).

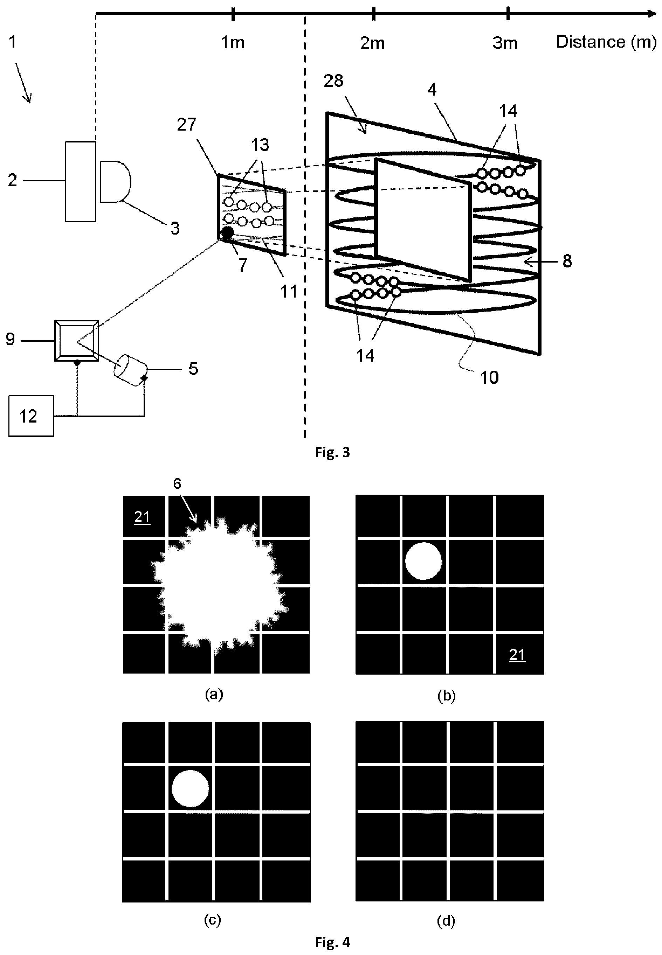

Fig. 3 shows the system (1) further comprising a processing unit (not shown), for example connected to the optical sensor (2). The unit is capable of estimating a power level of the reflected light signal from an object, and received by said optical sensor (2), and/or estimating a distance between said sensor (2) and points of at least one object in said scene (4) along said trajectory (8) and/or a spot size of said signal. For example, for a first set of points (13) of an object at a closer distance to said optical sensor (2) e.g. closer than a predetermined distance, and a second set of points (14) of an object at a further distance from said optical sensor (2) e.g. further than said predetermined distance. For example, the unit is capable of classifying regions of said scene (4) into regions having objects at a closer distance to said optical sensor (2), e.g. closer than said predetermined distance, such as the first region (27), and regions having objects at a further distance from said optical sensor (2), e.g. further than said predetermined distance, such as the second region (28). For example, if an object is further than a predetermined distance from said optical sensor (2), then it belongs to the second region (28). For example, the predetermined distance as shown in Fig. 3 is 1.5 meters. However, the distance is not the only factor that determines which objects belong to which region, as discussed in the description. For example, a highly reflective object that is further than said predetermined distance may belong to said first region (27), and similarly a weakly reflective object that is closer than said predetermined distance may belong to said second region (28). This also means that the predetermined distance is not always 1.5 meters.

After classifying the scene (4) to the first and second regions (27, 28), the unit tunes said controller (12) to vary the output optical power of said light source (5). For example, for objects further than 1.5 meters to said optical sensor (2), the output optical power of said light source (5) needs to be higher, for example the second predetermined value (10), and for objects closer than 1.5 meters from said optical sensor (2), the output optical power of said light source (5) needs to be lower, for example the first predetermined value (11). This is because the further the object, the weaker the reflected signal from said object.

In another implementation, the scene is not classified, and the output optical power of the said light source (5) is continuously adapted based on the assessment of the previous samples. Indeed, with sample frequencies much higher than the scan speed of the illuminator, the controller has sufficient time to adapt the output optical power of the light source (5) 'on the fly'. For instance, in case the previous sample windows detected no light spot or no reflected signal, the controller may increase the output optical power; similarly, in case the sensor senses a situation with too high incident signal, the controller may lower the output optical power.

The distance between said optical sensor (2) and objects in the scene (4) can be estimated based on the output optical power of said light source (5) and the light detected by said optical sensor (2), or for example the ratio between the two. For example, if the output optical power is high e.g. 0.2 W, then objects that are further than 1.5 meters from said optical sensor (2) would be detected by said optical sensor (2) accurately, while objects that are closer than 1.5 meters from said optical sensor (2) would not be detected accurately. This is because due to the closer distance of objects, many photons are reflected by said objects and received by the optical sensor (2), more than what said optical sensor (2) is adapted for, e.g. by pixel sensors of the optical sensor (2), which causes the detection to be inaccurate, for example due to the glare effect (6). On the other hand, if the output optical power is low e.g. 0.01 W, then the objects that are further than 1.5 meters from said optical sensor (2) would not be detected due to the lower number of photons reflected by said objects and received by said optical sensor (2), while objects that are closer than 1.5 meters from said optical sensor (2) would be detected accurately. This is illustrated in Fig. 4, as will be explained below. A second optical sensor may be present, in which the distance can be found by triangulating the data of the two optical sensors, as described in the description above.

Objects in all regions are monitored continuously, for example their distance from said optical sensor (2). For example, if the object in the first region (27) moves further from said optical sensor (2), for example further than said 1.5 meters, then the controller (12) tunes the light source (5) to illuminate the light beam (33) with a higher output optical power, for example the output optical power of the light source (5) being a second predetermined value (10). The same applies when an object further away from said optical sensor (2) (e.g. more than 1.5 meters) moves closer to said optical sensor (2).

Fig. 4 shows a simplified field of view of an optical sensor (2), for example wherein said optical sensor (2) comprises a plurality of pixel sensors, for example wherein a plurality of field of views (21) correspond to a plurality of pixel sensors (e.g. each pixel sensor comprising a photo detector). Fig. 4 shows four different scenarios. In Fig. 4 (a), the output optical power of said light source (5) is high e.g. 0.2 W. In this case, an object is present very close to the plurality of pixel sensors, for example less than 1.5 meters from said pixel sensors. This results in many photons being reflected by said object and received by said pixel sensors, for example more than what a pixel sensor is adapted to receive, which may for example result in the shown glare effect (6). The glare effect (6) makes it difficult to differentiate between detections of different neighboring pixel sensors. On the other hand, for objects further than said pixel sensors e.g. more than 1.5 meters away, the detection is more accurate, and the glare effect is no longer there, since the number of reflected and received photons is lower due to the longer distance, as shown in Fig. 4 (b). In this case, the number of photons corresponds to what the pixel sensor is adapted to receive. In the third scenario in Fig. 4 (c), the output optical power of said light source (5) is low e.g. 0.01 W, which is suitable for closer objects e.g. closer than 1.5 meters from said plurality of pixel sensors. For objects further away, however, this is unsuitable, since only a few or no photons are received by said plurality of pixel sensors, as shown in Fig. 4 (d). Fig. 5 shows an example of the expected average photon count received by a pixel sensor comprising a photo detector per sample period of said pixel sensor, as a function of the distance from said pixel sensor, wherein an optical sensor (2) comprises a plurality of pixel sensors. In (a) and (c), the output optical power of said light source (5) is 0.2 W and 0.01 W, respectively. The pixel sensor is adapted to operate at a region in which the photon count has a maximum desired value (17) and a minimum desired value (16). The photon count when the target is a Lambertian reflector with 100% reflectivity is shown in (18), as a function of the distance from said pixel sensor. Similarly, the photon count when the target is a Lambertian reflector with 10% reflectivity is shown in (19). As shown in (a), the two curves (18, 19) are within the maximum value (17) and minimum value (16) for objects in the second region (28). This indicates that for detecting objects in the second region (28), a high output optical power e.g. 0.2 W is needed. The opposite is shown in (c), wherein a low output optical power e.g. 0.01 W is needed for detecting objects in the first region (27). In Fig. 5 (a) and (c), the photo detector is biased such that it has a high quantum efficiency.

On the other hand, Fig. 5 (b) and (d) show a similar figure, however wherein the photo detector is biased such that it has a low quantum efficiency. In contrast with the implementation in Fig. 5 (a, c), this implementation is advantageous in lowering the noise. The drawback, however, is reducing the sensitivity for active light. The output optical power of said light source (5) in Fig. 5 (b) and (d) is as an example 1 W and 0.05 W, respectively.

As explained above, the distance between an object and said optical sensor (2) is either in the first region (28) e.g. above 1.2 meters, or in the second region (27) e.g. below 0.75 meters. However, as shown in Fig. 5, an object may also be in a third region (29) e.g. between 0.75 and 1.2 meters. For example, for an object between 0.75 and 1.2 meters from said pixel sensor, the photon count would not be within the maximum value (17) and the minimum values (16). In this case, a different output optical power of said light source (5) is needed. Therefore, said controller (12) may also be adapted to vary the output optical power of said light source (5) between a first predetermined value (11), a second predetermined value (10) higher than said first predetermined value (11), and a third predetermined value, higher than said first predetermined value (11) and lower than said second predetermined value (10).

Fig. 6 shows the field of view of said optical sensor (2). The scanning means (9) scan the light beam (33) of the light source (5) on said scene (4). The deflection angle of said means (9) is modulated based on a beam steering function, for example in a Lissajous fashion. The beam angular velocity of the function is reduced when the deflection angle reaches its extreme values, for example at the edges of the scene (4). The scene (4) can therefore be classified into two regions, a field of view region in which the angular velocity of the function is at its lowest (22), for example below a predetermined angular velocity, and a field of view region in which the angular velocity of the function is at its highest (23), for example above a predetermined angular velocity, as shown in Fig. 6 (b). As shown in Fig. 6 (b), by switching off the light source (5) during the period in which the angular velocity is at its lowest, the power consumption can be reduced, while at the same time not affecting the field of view majorly. For example, by reducing the field of view by 10% on each axis as shown in Fig. 6 (b, c), the power consumption is already reduced by 50%. This is a particularly advantageous effect. Fig. 6 (a) shows the field of view in a standard case i.e. without switching off the light source (5).

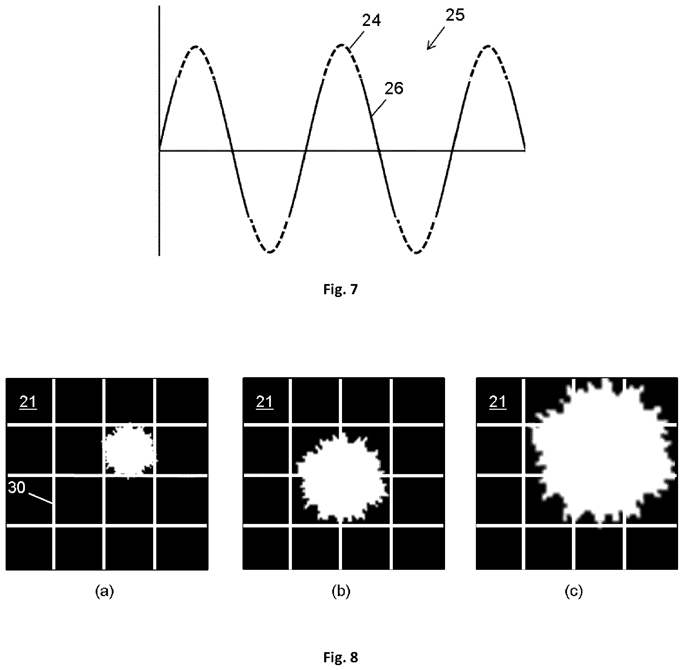

Fig. 7 shows an example of said beam steering function, in this case a sinusoidal function (25) modulating the deflection angle of said scanning means (9) when scanning said light beam (33) of said light source (5). Said output optical power is varied based on the angular velocity of said function (25). The function (25) has two parts with regards to its angular velocity, a part where said angular velocity is at its lowest (24), and a region where said angular velocity is at its highest (26). By operating the light source (5) only in the region in which the angular velocity is at its highest (26), for example above a threshold angular velocity, the field of view may be slightly reduced e.g. by 10%, whereas the power consumption is significantly reduced e.g. by 50%.

Fig. 8 shows a plurality of field of views (21) corresponding to a plurality of pixel sensors, wherein detections having different spot sizes are shown, wherein a single spot size (30) covers one pixel sensor. For example, in (a), the spot size is 1 pixel sensor, while in (b), the spot size is 4 pixel sensors, and 9 pixel sensors for (c). The processing unit is capable of tuning the controller (12) to vary the output optical power of said light source (5) based on the spot size. For example, if the spot size is 9 as in (c), this indicates that the object is very close to said pixel sensors, and therefore the output optical power of said light source (5) should be lowered. The controller (12) of said light source (5) is then tuned to lower said output optical power. A predetermined threshold spot size may be chosen, for example to determine whether or not to tune the controller (12), for example whether or not a detection belongs to an object very close or very far from said optical sensor (2).

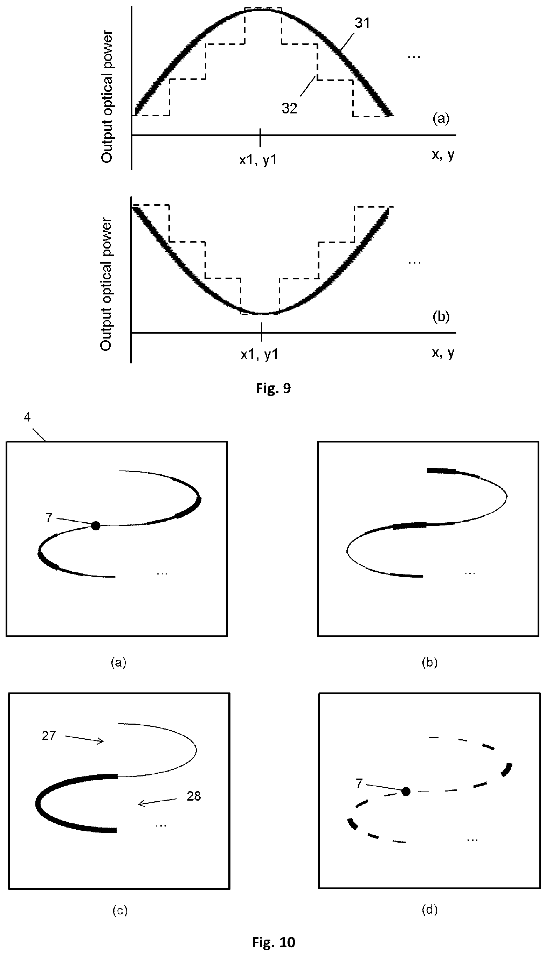

Fig. 9 shows an implementation of the optical sensing system (1), wherein the output optical power of said light source (5) is varied in a staircase fashion when being scanned in the scene (4). This is useful for example in an initial stage to determine where in the scene (4) are the objects further or closer to said sensing system (1). This can be repeated every predetermined time period, for example to update the data of the objects in the scene (4), for example in case objects that are closer have moved further, or the opposite. Based on the findings, for example based on the distance of the objects from the scene, or for example based on the spot size of the reflected signal off said objects, or for example from the ratio of the emitted power by said light source (5) to the received power of said sensor (2), the output optical power may be adjusted accordingly. This is also shown in Fig. 10 as described below. Both a positive staircase as shown in (a) and a negative staircase as shown in (b) can be applied one after another at the same location of the scene (4). For example, to see which of the two is more suitable to illuminate a certain part of the scene (4). The variation of said output optical power can be done in a digital discontinuous staircase fashion (32), or in an analog continuous function fashion (31).

Similarly to Fig. 9, Fig. 10 shows a light spot (7) of a light beam (33) scanned on a scene (4) in a staircase fashion. The different line widths correspond to a different output optical power of said light source (5). Fig. 10 (a) and (b) are the same, but with a reversed output optical power when scanning the same portion of said scene (4). As described in Fig. 9, this can be useful to determine which of the two illuminations is more suitable for a certain portion of said scene (4). Once this is determined, the suitable output optical power is illuminated at the respective portion of the scene (4). For example, Fig. 10 (c) shows the two different output optical power levels, suitable for illuminating at different parts of the scene (4). For example, wherein the first region is illuminated by a lower output optical power, and the second region is illuminated by a higher output optical power. Finally, Fig. 10 (d) shows that the duty cycle can also be changed. For example, in case the user is looking at a scene which is not changing or is changing slowly.

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

### LIST OF REFERENCE SIGNS

- **1**: Optical sensing system
- **2**: Optical sensor
- **3**: Optics
- **4**: Scene
- **5**: Light source
- **6**: Glare effect
- **7**: Light spot
- **8**: Trajectory
- **9**: Scanning means
- **10**: A second predetermined value
- **11**: A first predetermined value
- **12**: Controller
- **13**: A first set of points
- **14**: A second set of points
- **16**: A minimum value of photon counts
- **17**: A maximum value of photon counts
- **18**: Photon count for 100% output optical power
- **19**: Photon count for 10% output optical power
- **21**: A pixel sensor's field of view
- **22**: A field of view region corresponding to minimum angular velocity
- **23**: A field of view region corresponding to maximum angular velocity
- **24**: A part of the modulating function having lowest angular velocity
- **25**: A modulating function
- **26**: A part of the modulating function having highest angular velocity
- **27**: A first region
- **28**: A second region
- **29**: A third region
- **30**: A single spot size
- **31**: Digital discontinuous stair-case function
- **32**: Analog continuous stair case function
- **33**: Light beam

## Claims

1. An optical sensing system (1) for optical sensing, comprising:
- at least one optical sensor (2),
- optics (3) able to produce an image of a scene (4) on said optical sensor (2),
- at least one light source (5),
- scanning means (9) adapted to scan a light beam (33) from said light source (5) on said scene (4) along a trajectory (8), and
- a controller (12),
**characterized in that** said controller (12) is adapted to vary the output optical power of said light source (5) between at least a first predetermined value (11), and a second predetermined value (10) higher than said first predetermined value (11).

2. An optical sensing system (1) according to claim 1, wherein said optical sensor (2) has a sampling frequency, wherein said output optical power of said light source (5) is varied between said first and second predetermined values (11, 10) with a rate of at most said sampling frequency.

3. An optical sensing system (1) according to any of claims 1 or 2, wherein said system (1) comprises a processing unit, wherein said unit is capable of estimating a power level of the reflected signal by at least one object in said scene (4) and received by said optical sensor (2), wherein said unit is capable of tuning said controller (12) to vary the output optical power of said light source (5) based on said power level of the reflected signal.

4. An optical sensing system (1) according to any of claims 1 or 2, wherein said system (1) comprises a processing unit, wherein said unit is capable of estimating a distance between said optical sensor (2) and points of said at least one object in said scene (4) along said trajectory (8), wherein said unit is capable of tuning said controller (12) to vary the output optical power of said light source (5) based on said distance.

5. An optical sensing system (1) according to any of claims 1 or 2, wherein said system (1) comprises a processing unit, wherein said unit is capable of estimating a spot size of the reflected signal, wherein said unit is capable of tuning said controller (12) to vary the output optical power of said light source (5) based on said spot size.

6. An optical sensing system (1) according to claim 4 wherein said system (1) comprises at least two optical sensors (2), wherein the distance is estimated by triangulating points of said at least one object in said scene (4) detected by a first optical sensor, with points of said at least one object in said scene (4) detected by a second optical sensor.

7. An optical sensing system (1) according to any of the previous claims, wherein the output optical power is varied from said second predetermined value (10) to said first predetermined value (11).

8. An optical sensing system (1) according to any of the previous claims, wherein said system (1) comprises at least two light sources (5), wherein the output optical power of the first light source is said first predetermined value (11), and the output optical power of the second light source is said second predetermined value (10), wherein the at least two light sources operate at different times.

9. An optical sensing system (1) according to any of the previous claims, wherein said optical sensor (2) comprises a plurality of pixel sensors, each pixel sensor comprising a photo detector,
wherein said controller (12) is adapted to vary a bias of each of said photo detectors.

10. An optical sensing system (1) according to any of the previous claims, wherein the scanning means (9) scan a light beam (33) of said light source (5) on said scene (4) based on a beam steering function having a beam angular velocity, wherein the output optical power of said light source (5) is varied based on said angular velocity.

11. An optical sensing system (1) according to claim 9, wherein said output optical power is adapted to be equal to at most said first predetermined value (11) when said angular velocity is less than a threshold angular velocity.

12. An optical sensing system (1) according to any of the previous claims, wherein the duty cycle of said light source (5) is at most 80%, preferably at most 60%, more preferably at most 40%, most preferably at most 20%.

13. A method for optical sensing, comprising the steps of:
- illuminating a scene (4) by means of a light beam (33) of a light source (5),
- scanning said light beam (33) on said scene (4) along a trajectory (8),
- receiving a reflected light signal from said scene (4) by means of a receiver, and
- sampling said reflected light signal,
**characterized in that** the method step further comprises the step of:
- varying the output optical power of said light source (5) between at least a first predetermined value (11) and a second predetermined value (10) higher than said first predetermined value (11).

14. A method according to claim 13, wherein said reflected signal is sampled with a predetermined sampling frequency, wherein the step of varying said output optical power between said first and second predetermined values (11, 10) is done with a rate of at most said sampling frequency.

15. A method according to any of claims 13 or 14, wherein the method further comprises the steps of:
- estimating a power level of the reflected signal and tuning based thereon the output optical power of said light source (5), and/or
- estimating a distance between the receiver and said object and tuning based thereon the output optical power of said light source (5), and/or
- estimating a spot size of said reflected signal and tuning based thereon the output optical power of said light source (5).
